# EUROPÄISCHE PATENTSCHRIFT

(11) **EP 3 828 076 B1**
(45) Veröffentlichungstag und Bekanntmachung des Hinweises auf die Patenterteilung: **24.04.2024**
(21) Anmeldenummer: 20209783.8
(22) Anmeldetag: 25.11.2020
(51) Int. Cl.: B64C 1/20, B64F 5/10

(54) **STRUKTURVERSTÄRKENDES FRACHTRAUMMODUL**
STRUCTURE-REINFORCING CARGO AREA MODULE
MODULE DE SOUTE À FRET DE RENFORT À STRUCTURE RENFORCÉE

(30) Priorität: 28.11.2019 DE 102019132292
(43) Veröffentlichungstag der Anmeldung: 02.06.2021
(73) Patentinhaber: Telair International GmbH, 83714 Miesbach (DE)
(72) Erfinder: Huber, Thomas, 83727 Schliersee (DE)
(74) Vertreter: Meissner Bolte Partnerschaft mbB

(56) Entgegenhaltungen:
- EP-A1- 2 985 232
- WO-A1-87/06909
- DE-A1- 3 141 869
- US-A1- 2009 294 588
- US-A1- 2010 140 396

## Beschreibung

Die Erfindung betrifft ein Frachtraummodul, das dazu dient, Funktionseinrichtungen und dgl. wesentliche Elemente innerhalb eines Frachtraumes eines Flugzeuges zu montieren.

Im Frachtraum eines Flugzeugs ist eine Vielzahl von Funktionseinrichtungen montiert, z.B. Rollenbahnen, auf denen Behälter (ULDs), Paletten oder dergleichen im Frachtraum bewegt werden, Riegel zum Halten der Frachtstücke oder Verzurr-Einrichtungen zum Verzurren von Frachtstücken. Alle diese Einrichtungen müssen mit stabilen tragenden Strukturen des Flugzeugs verbunden sein, also mit Querträgern, die mit Spanten des Flugzeugs verbunden sind oder mit den Spanten selbst. Auch eine Montage an Längsträgern ist ab und an notwendig.

Weiterhin muss Bedienungspersonal den Frachtraum betreten können. Hierfür müssen entsprechende Flächeneinheiten am Boden des Frachtraums vorgesehen sein.

Die Montage der verschiedenen Funktionseinrichtungen ebenso wie diejenige der Flächeneinheiten ist aufwendig.

Aus der EP 1 646 558 B1 ist es bekannt, komplette Bodenmodule einschließlich der Funktionseinrichtungen und der tragenden Strukturen außerhalb des Flugzeugs zu montieren und dann in das Flugzeug einzubauen.

Aus der WO 2016/150 908 A1 ist es bekannt, faltbare Einlegeeinrichtungen dazu zu verwenden, um einen Frachtraum mit einem funktionellen Boden auszustatten. Hierbei werden verschiedene Funktionseinrichtungen bereits mit den jeweiligen Einlegeeinrichtungen verschraubt. Weiterhin werden in der WO 2016/150 908 A1 die Funktionseinrichtungen verwendet, um die Einlegeeinrichtung mit tragenden Strukturen bzw. Tragstrukturen des Flugzeugs zu verbinden.

Allgemein besteht beim Bau von Flugzeugen das Problem, dass die Flugzeuge in sehr unterschiedlichen Konfigurationen ausgeliefert und/oder im Lauf ihrer Lebenszeit eingesetzt werden. Einige Flugzeuge dienen ausschließlich zum Transport von Fracht. Andere Flugzeuge haben ein Frachtdeck sowie ein Passagierdeck, so dass Passagiere und Fracht transportiert werden können.

Auch für die Ausstattung des Unterdecks gibt es teilweise unterschiedliche Anforderungen. Bei der Ausgestaltung des Frachtraums im unteren Bereich des Flugzeugs stellt es sich als eine wesentliche Einschränkung dar, dass das Oberdeck/Hauptdeck/Passagierdeck mittels Vertikalstreben abgestützt werden muss, um dem Flugzeug die notwendige Stabilität zu verleihen. Die Vertikalstreben bilden also einen Teil der Struktur des Flugzeuges. Die Konfigurationsfreiheit im Unterdeck ist aufgrund dieser Vertikalstreben stark eingeschränkt. Deren Montage und Anbringung ist beim Flugzeugbau aufwendig.

Die DE 31 41 869 A1 beschreibt eine Fußbodenkonstruktion für das Hauptdeck eines Flugzeugs. Die Fußbodenkonstruktion weist einen annähernd kreisförmigen Rumpfquerschnitt auf und besteht hauptsächlich aus in Rumpfquerrichtung verlaufenden seitlich abgestützten Biegeträgern und die Biegeträger tragenden Stützelementen. Der Aufbau der Fußbodenkonstruktion soll derart vereinfacht werden, dass eine deutliche Senkung des Baugewichts sowie der Fertigungskosten erreicht wird. Dazu sind die Biegeträger als einstückige, annähernd über den gesamten Rumpfinnendurchmesser sich erstreckende Fußbodenplatten ausgeführt, von deren seitlichen Rändern zur Rumpfaußenstruktur hin jeweils mehrere durch schräg nach vorn verlaufende Stangen gebildete Verbindungen bestehen, um vorwiegend in Flugzeug-Längsrichtung wirkende Kräfte zu übertragen. Die die Fußbodenplatten tragenden Stützelemente sind als längs vertikal verlaufende Flächenbauteile ausgebildet, die gleichzeitig die Seitenwände des Frachtraums bilden. Zur weiteren Senkung des Baugewichts und der Fertigungskosten bestehen die Fußbodenplatten und/oder die Flächenbauteile aus faserverstärktem Kunststoff.

Die EP 2 985 232 A1 offenbart ein Verfahren zum Zusammenbau eines Flugzeugrumpfes. Dazu werden in einem ersten Schritt die sekundären Strukturkomponenten und die Innenraumkomponenten zu einer Kernstruktur zusammengefügt. Die Kernstruktur besteht aus einem Kabinenboden, Seitenwandpaneelen und Deckenpaneelen. In einem weiteren Schritt des Verfahrens wird eine Primärstruktur um die Kernstruktur herum angeordnet, um einen Teil eines Rumpfes zu bilden. Die Erfindung bezieht sich ferner auf einen Flugzeugrumpf, der nach dem Verfahren zusammengebaut wird.

In der US 2010/ 140 396 A1, wird eine Vorrichtung zur Aufbewahrung von Gegenständen, insbesondere von Gepäck, in einem Flugzeugladeraum beschrieben, wobei die Vorrichtung eine flexible Trennwand und mindestens einen Aufwickelmechanismus aufweist. Die flexible Trennwand ist so auf dem Aufwickelmechanismus angebracht, dass sie sowohl auf den Aufwickelmechanismus aufgewickelt als auch vom Aufwickelmechanismus abgewickelt werden kann. Die flexible Trennwand umfasst einen Befestigungsmechanismus, der mit einem ergänzenden Mechanismus zusammenwirkt, um die flexible Trennwand in einer abgewickelten Position zu halten.

Die US 2009/ 294 588 A1 offenbart eine Rumpfstruktur für ein Flugzeug oder ein ähnliches Fahrzeug mit einem oberen Rumpfteil und einem unteren Rumpfteil und einem dazwischen angeordneten Boden. Zwischen dem Boden und dem unteren Rumpfteil kann mindestens eine einheitliche Stütze angeordnet sein. Die mindestens eine einheitliche Stütze kann die einzige strukturelle Stütze zwischen dem Boden und dem unteren Rumpfteil ohne vertikale Balken bilden.Ausgehend von der EP 1 646 558 B1 ist es Aufgabe der vorliegenden Erfindung ein verbessertes Frachtraummodul bereitzustellen. Insbesondere soll das Frachtraummodul die Herstellung eines funktionellen Frachtraums erleichtern. Weiterhin soll ein verbessertes Flugzeug geschaffen werden, das einfach herstellbar und/oder umkonfigurierbar ist.

Die Aufgabe wird durch ein Frachtraummodul gemäß dem Anspruch 1, einem Flugzeug gemäß dem Anspruch 11 sowie einem Verfahren gemäß dem Anspruch 12 gelöst. Insbesondere wird die Aufgabe gelöst durch ein Frachtraummodul für ein Flugzeug, umfassend:
- mindestens einen Boden;
- mindestens eine Seitenwand, die mit dem Boden verbunden ist,
- obere Montageeinrichtungen zur Verbindung der Seitenwand mit dem Hauptdeck, insbesondere Querträgern des Hauptdecks,
- untere Montageeinrichtungen zur Verbindung der Seitenwand mit Spanten und/oder anderen Strukturelementen des Flugzeugs,

wobei die Seitenwand Verstärkungen derart aufweist, dass die Seitenwand geeignet ist, in einem montierten Zustand einen Teil der Tragstruktur des Flugzeugs zu bilden und/oder das Hauptdeck abzustützen,
dadurch gekennzeichnet, dass der Boden über ein Gelenk mit der mindestens einen Seitenwand verbunden ist.

Ein wesentlicher Vorteil des Frachtraummoduls ist es, dass das Frachtraummodul selbst Trag- bzw. Stützstrukturen bereitstellt, die das Hauptdeck abstützen und/oder befestigen. Die eingangs bereits erläuterten Vertikalträger können daher entfallen und/oder in einem geringeren Umfang vorgesehen werden. Soweit man auf diese Vertikalträger verzichten kann, lässt sich insbesondere der untere Innenbereich des Flugzeugs flexibel nutzen. Weiterhin kann der zur Verfügung stehende Bereich vollumfänglich ausgenutzt werden. Beispielsweise können komfortable Kojen für das Flugpersonal installiert werden.

Das Fehlen der Vertikalträger macht sich auch positiv bei der Montage des Frachtraumbodens bzw. der Frachtraummodule bemerkbar, da diese den Montagebereich nicht unnötig beengen.

Um die genannte Stützfunktion wahrzunehmen, ist die Seitenwand erfindungsgemäß verstärkt, so dass sie im eingebauten Zustand innerhalb des Flugzeugs eine tragende Funktion wahrnehmen kann.

In einer Ausführungsform ist die mindestens eine Montageeinrichtung derart ausgebildet, dass die Seitenwand durch Schraubeinrichtungen mit dem Hauptdeck und/oder Spanten und/oder Strukturelementen des Flugzeugs verbindbar ist. Allgemein dient die Montageeinrichtung dazu, eine kraftübertragende Verbindung zwischen dem Flugzeug und der Seitenwand bzw. zwischen dem Hauptdeck und der Seitenwand herzustellen. Schraubverbindungen sind diesbezüglich besonders vorteilhaft, da sie eine einfache Montage und Demontage ermöglichen.

In einer Ausführungsform ist zumindest eine Komponente des Frachtraummoduls als Faserverbundwerkstoff ausgebildet. Vorzugsweise sind Boden und/oder Seitenwand aus einem Faserverbundwerkstoff hergestellt. Die mindestens eine Seitenwand kann mit dem Boden über Faserstränge, die vorzugsweise Teile von Fasermatten sind, verbunden sein. In einer Ausführungsform werden Boden und Seitenwand als ein Element hergestellt.

In einer Ausführungsform ist der Faserverbundwerkstoff zumindest teilweise als Sandwichstruktur ausgestaltet. Beispielsweise kann der Boden eine entsprechende Sandwichstruktur umfassen. Vorzugsweise werden ein oder mehrere Hybridkerne eingesetzt, um eine hohe Stabilität bei geringem Gewicht herzustellen. Entsprechende Hybridkerne können auch in der mindestens einen Seitenwand oder einer noch zu erläuternden Deckenstruktur des Frachtraummoduls enthalten sein.

In einer Ausführungsform umfasst der Hybridkern zumindest eine erste Kernschicht aus faserverstärktem Kunststoff (z.B. GFK oder CFK) und eine zweite Kernschicht aus faserverstärktem Kunststoff. Zwischen diesen beiden Kernschichten kann eine Schaumstoffschicht und/oder eine andere Stützstruktur, beispielsweise eine Wabenstruktur aus Papier, Karton oder Kunststoff, eingelagert sein. Der Hybridkern, umfassend die Kernschichten sowie die Schaumstoffschicht bzw. andere Stützstrukturen, ist vorzugsweise zumindest derart kunstharzdurchsetzt, dass die einzelnen Komponenten zusammengehalten werden. Es können schaumstofffreie Randbereiche vorgesehen sein, um eine stoffschlüssige Verbindung zwischen den Kernschichten herzustellen. Weiterhin können diese schaumstofffreien Randbereiche verwandt werden, um Montageeinrichtungen herzustellen, die mit den Tragstrukturen des Flugzeugs verbunden werden. Nähere Erläuterungen zur Herstellung und Ausgestaltung eines entsprechenden Hybridkerns finden sich in der WO 2016/150 908 A1, die hiermit explizit in den Offenbarungsgehalt der vorliegenden Anmeldung einbezogen wird.

Der Boden kann mindestens einen Horizontalabschnitt und mindestens einen gegenüber dem Horizontalabschnitt geneigten Seitenabschnitt umfassen. Horizontalabschnitt und/oder Seitenabschnitt können mit einer Stützstruktur (z.B. einem Bodenträger), insbesondere über mehrere Schraubverbindungen, verbunden sein. Bei der Stützstruktur kann es sich auch um eine Tragstruktur des Flugzeugs handeln. Aufgrund der Ausbildung des Bodens in Form von Horizontal-und geneigten Seitenabschnitten lässt sich das Frachtdeck besser an die Rundungen des Flugzeugs anpassen, so dass eine optimale Ausnutzung des verfügbaren Raums gewährleistet ist.

In einer Ausführungsform weist das Gelenk einen Gelenkabschnitt auf. Der Gelenkabschnitt kann über teilweise elastische Bereiche ausgebildet sein. Insbesondere wenn es sich bei dem Frachtraummodul um ein Frachtraummodul handelt, das zumindest teilweise in Form eines Faserverbundwerkstoffs ausgebildet ist, ist das Vorsehen von elastischen Bereichen zur Herstellung der Gelenkabschnitte besonders vorteilhaft. Die Faserstrukturen können für eine Verbindung der Elemente sorgen, während das elastische Material ein Biegen bzw. Abknicken gewährleistet, wodurch die Gelenkabschnitte in einfacher Weise hergestellt werden können. Dies kann unter anderem den Fertigungsprozess des Frachtraummoduls erheblich erleichtern. Nähere Erläuterungen hierzu finden sich ebenso in der WO 2016/150 908 A1.

In einer Ausführungsform ist die Dicke der Schaumstoffschicht bzw.

Wabenstruktur bzw. Stützstruktur im Gelenkbereich derart reduziert, dass ein einfaches Abknicken möglich ist. Alternativ kann dieser Bereich schaumstofffrei oder wabenstrukturfrei ausgebildet sein, um die genannte Funktion zu erzielen.

Die Erfindung ist aber nicht auf derartige elastische Gelenke beschränkt. Die Gelenkbereiche können auch durch bekannte mechanische Gelenke, z.B. Scharniere, hergestellt werden.

In einer Ausführungsform umfasst das Frachtraummodul Dichtlippen, die an Rändern des Moduls zur Abdichtung von Übergängen zu weiteren Frachtraummodulen angeordnet sind. Es ist vorteilhaft, wenn zumindest weite Abschnitte des Frachtraums anhand der besagten Frachtraummodule hergestellt werden. Um die häufig notwenige Gasdichte zwischen den einzelnen Modulen herzustellen, sind Dichtlippen vorteilhaft. Es ist auch möglich, die Randbereiche derart anzuschrägen, so dass ein flächiger Formschluss zwischen den einzelnen Frachtraummodulen hergestellt werden kann. Die Dichtlippen sorgen dann in diesem Flächenbereich für einen hohen Grad von Abdichtung.

Zumindest der Boden kann zur Bildung einer gas- und/oder wasserdichten Absperrung zwischen der Oberseite und Unterseite ausgebildet sein. In einer Ausführungsform umfassen Ränder des Bodens und/oder mindestens einer Seitenwand und/oder mindestens einer Decke Dichtlippen zur Abdichtung von Übergängen zu weiteren Frachtraummodulen.

In einer Ausführungsform umfasst das Frachtraummodul eine Decke, die mit der mindestens einen Seitenwand verbunden ist. In einer bevorzugten Ausgestaltung ist die Decke ihrerseits faltbar. Hierfür können Gelenke, insbesondere Gelenkabschnitte, vorgesehen sein, wie diese bereits erläutert wurden.

In einer Ausführungsform umfasst das Frachtraummodul ein Paar von Seitenwänden und ein Paar von Seitenabschnitten. Der Boden mit den (schrägen) Seitenabschnitten kann mit den Seitenwänden gelenkig verbunden sein, wie dies bereits erläutert wurde. Die Seitenwände können ihrerseits gelenkig mit der Decke verbunden sein. Somit kann das Frachtraummodul als eine Art zusammenfaltbarer Hohlkörper bzw. Tunnel ausgebildet sein, der in seinem entfalteten Zustand Boden, Seiten und Decke des Frachtraums ausbildet. In einem zusammengefalteten Zustand hat das Frachtraummodul deutlich geringere Abmessungen und ist ggf. flexibel. Daher ist es möglich, das Frachtraummodul in dem zusammengefalteten Zustand einfach in das Flugzeug einzubringen, um so die Montage zu erleichtern. Das Frachtraummodul wird in dem entfalteten Zustand mit den Stützstrukturen verbunden, insbesondere verschraubt.

In einer Ausführungsform sind einige der Funktionselemente des Frachtraummoduls, insbesondere die Seitenwände und/oder Seitenabschnitte und/oder der Horizontalabschnitt als rechteckige Paneele oder Flächenelemente ausgebildet. Aus entsprechend rechteckigen Paneelen kann auch die faltbare Decke hergestellt werden.

In einer Ausführungsform ist mindestens eine Trittpfanne mit einem Trittbereich vorgesehen, wobei die mindestens eine Trittpfanne in mindestens einem Seitenabschnitt des Bodens angeordnet ist. Der Trittbereich kann derart ausgebildet sein, dass er im angeordneten und/oder entfalteten Zustand des Frachtraummoduls im Wesentlichen parallel zum Horizontalabschnitt des Bodens verläuft. In einer Ausführungsform sind die Trittpfannen einstückig in den jeweiligen Seitenabschnitt integriert.

Ein Vorteil der Trittpfannen besteht darin, dass diese es ermöglichen, beim Beladen oder Entladen des Frachtdecks an der Fracht seitlich vorbeizugehen. Dies kann notwendig sein, wenn der Lade- oder Entladeprozess eine manuelle Interaktion erfordert. Beispielsweise kann beim Beladen von Paletten ein zum Halten des Frachtguts auf Paletten vorgesehenes Netz am Frachtsystem hängenbleiben. In diesem Fall ist es notwendig, den entsprechenden Abschnitt des Frachtdecks aufzusuchen und das Netz zu lösen. Bei bekannten Frachtraummodulen war es notwendig, hierfür seitlich auf den schrägen Seitenabschnitten zu gehen. Dies ist nicht einfach und teilweise sogar für das Personal gefährlich. Allgemein erhöht das Vorsehen von (segmentierten) Trittpfannen die Bewegungs- und Ausweichmöglichkeiten des Personals beim Be-und Entladen von Fracht. Auch Wartungen, beispielsweise hinter einer der Seitenwände, sind einfacher, wenn das Wartungspersonal die horizontale Fläche des Trittbereichs zur Verfügung hat, die es ermöglicht, näher an die Seitenwand heranzukommen.

In einer Ausführungsform ist die Verstärkung in Form einer Gitterstruktur ausgebildet. Soweit das Frachtraummodul aus Faserverbundwerkstoff hergestellt wird, kann die Verstärkung durch das Einlagern von zusätzlichen Fasern hergestellt werden. Die besagte Gitterstruktur kann daher dadurch erzeugt werden, dass es Bereiche mit höherer Faserlagenanzahl und Bereiche mit geringerer Faserlagenanzahl gibt. Die Gitterstruktur kann Querstreben umfassen.

Die eingangs genannte Aufgabe wird ebenfalls durch ein Flugzeug, umfassend mindestens ein Frachtraummodul, das derart ausgestaltet ist, wie dies vorhergehend erläutert wurde, gelöst. In einer Ausführungsform umfasst das Flugzeugdeck eine Vielzahl von entsprechenden Frachtraummodulen. Die Frachtraummodule können über die bereits erläuterten Dichtlippen miteinander verbunden sein.

Bei dem erfindungsgemäßen Flugzeug bilden die Verstärkungen des jeweiligen Frachtraummoduls tragende Strukturen aus. Insbesondere stützen die Seitenwände des Moduls das Oberdeck bzw. Hauptdeck ab. Vorzugsweise sind die Verstärkungen anstelle bzw. zum Ersatz von Vertikalstützen ("Stanchions") mit dem Flugzeug verschraubt.

Es ergeben sich ähnliche Vorteile, wie diese bereits in Verbindung mit dem Frachtraummodul als solches beschrieben wurden.

Die eingangs genannte Aufgabe wird weiterhin durch ein Verfahren zur Installation eines Frachtdecks gelöst. Insbesondere kann es sich hierbei um ein Verfahren zur Herstellung eines Flugzeugs handeln, wie dies bereits erläutert wurde.

Das Verfahren umfasst die nachfolgenden Schritte:
a) Herstellen eines erfindungsgemäßen Frachtraummodules;
b) Einbringen des Frachtraummodules in das Flugzeug;
c) Befestigen der Seitenwände einerseits am Hauptdeck des Flugzeugs, andererseits an insbesondere bilgennahen Tragstrukturen des Flugzeugs derart, dass die Seitenwände das Hauptdeck gegenüber den Tragstrukturen des Flugzeugs abstützen.

Es ergeben sich ähnliche Vorteile, wie diese bereits in Verbindung mit den einzelnen Frachtraummodulen erläutert wurden.

Bei dem Verfahren kann das Frachtraummodul in das Flugzeug in einem zusammengefalteten Zustand eingebracht werden, wobei vor dem Schritt c) ein Auf- und/oder Entfalten des Frachtraummoduls erfolgt.

Das Verfahren kann weiterhin ein Befestigen von Funktionseinrichtungen an vordefinierten Stellen des Bodens außerhalb des Flugzeugs sowie ein Befestigen der Funktionseinrichtung mitsamt dem Boden an tragenden Strukturen des Flugzeugs umfassen. Letztendlich können die Funktionseinrichtungen also an vordefinierten Stellen des Frachtraummoduls vormontiert sein. Nach einem Einbringen des Frachtraummoduls werden die Funktionseinrichtungen zumindest teilweise mit den Tragstrukturen des Flugzeugs verbunden, z. B. verschraubt. Insofern versteifen die Funktionseinrichtungen ihrerseits das Frachtraummodul und sorgen für eine sichere Befestigung des Frachtraummoduls im Flugzeug.

Beim erfindungsgemäßen Verfahren kann das Frachtraummodul zumindest teilweise aus einem Faserverbundwerkstoff hergestellt sein.

In einer Ausführungsform werden zahlreiche Frachtraummodule in das Flugzeug eingebracht und bei der Montage miteinander, insbesondere gasdicht, verbunden.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Fig. 1: ein Frachtraummodul in einem entfalteten Zustand;
- Fig. 2: das Frachtraummodul aus Fig. 1 in einem teilweise eingefalteten Zustand;
- Fig. 3: das Frachtraummodul aus Fig. 1 in einem weiter teilweise gefalteten Zustand;
- Fig. 4: das Frachtraummodul aus Fig. 1 in einem zusammengefalteten Zustand;
- Fig. 5: eine Seitenansicht des Frachtraummoduls korrespondierend zu Fig. 1;
- Fig. 6: eine Seitenansicht des Frachtraummoduls korrespondierend zu Fig. 3;
- Fig. 7: eine Seitenansicht des Frachtraummoduls korrespondierend zu Fig. 4;
- Fig. 8: einen schematischen Schnitt durch ein Flugzeug mit installiertem bzw. eingebautem Frachtraummodul;
- Fig. 9: einen schematischen Teilschnitt durch ein Flugzeug mit eingebautem Frachtraummodul, wobei ein Seitenabschnitt gezeigt ist;
- Fig. 10: eine Detailansicht der rechten Seitenwand des Frachtraummoduls aus Fig. 1;
- Fig. 11: ein Frachtraummodul ähnlich dem aus Fig. 1 mit Trittpfannen im entfalteten Zustand; und
- Fig. 12: das Frachtraummodul aus Fig. 11 in einer Ansicht von unten.

In der nachfolgenden Beschreibung werden für gleiche und gleichwirkende Teile dieselben Bezugsziffern verwendet.

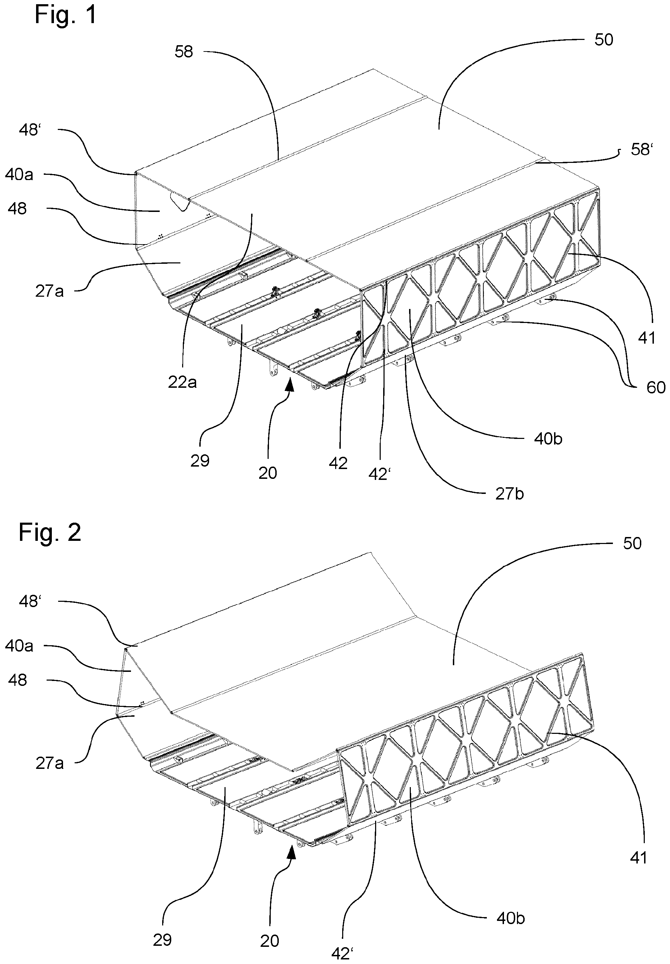

Fig. 1 zeigt ein erfindungsgemäßes Frachtraummodul in einem entfalteten Zustand. Das Frachtraummodul ist im Wesentlichen ein Hohlkörper umfassend die nachfolgenden Komponenten:
- Boden 20;
- Linke Seitenwand 40a;
- Decke 50;
- Rechte Seitenwand 40b.

Die besagten Komponenten sind gelenkig miteinander verbunden. So ist zwischen dem Boden 20 und der linken Seitenwand 40a bzw. rechten Seitenwand 40b jeweils ein unterer Gelenkabschnitt 48 vorgesehen. Ein oberer Gelenkabschnitt 48' verbindet die linke Seitenwand 40a bzw. die rechte Seitenwand 40b mit der Decke 50.

Die Decke 50 ist ihrerseits faltbar. Es ist möglich, diesbezüglich zwei rechteckige Flächenelemente bzw. Paneele vorzusehen und diese über einen Gelenkabschnitt zu verbinden. In dem in Fig. 1 gezeigten Ausführungsbeispiel gibt es drei rechteckige Flächenelemente, die über die Gelenkabschnitte 58 und 58' miteinander verbunden sind.

Auch der Boden 20 des Ausführungsbeispiels gemäß Fig. 1 ist in drei Flächenelemente unterteilt. Hierbei handelt es sich um den Horizontalabschnitt 29, der im Wesentlichen waagrecht im Flugzeug eingebaut wird und die überwiegende Anzahl der Funktionseinrichtungen 30, 30', 30", 30‴ beherbergt sowie einen linken Seitenabschnitt 27a und einen rechten Seitenabschnitt 27b. In dem beschriebenen Ausführungsbeispiel ist auch der Horizontalabschnitt 29 über Gelenkabschnitte 28, 28' mit den Seitenabschnitten 27a, 27b gelenkig verbunden. Insofern ist auch der Boden 20 in sich faltbar. Es ist erfindungsgemäß aber auch möglich den Boden 20 in sich starr auszubilden.

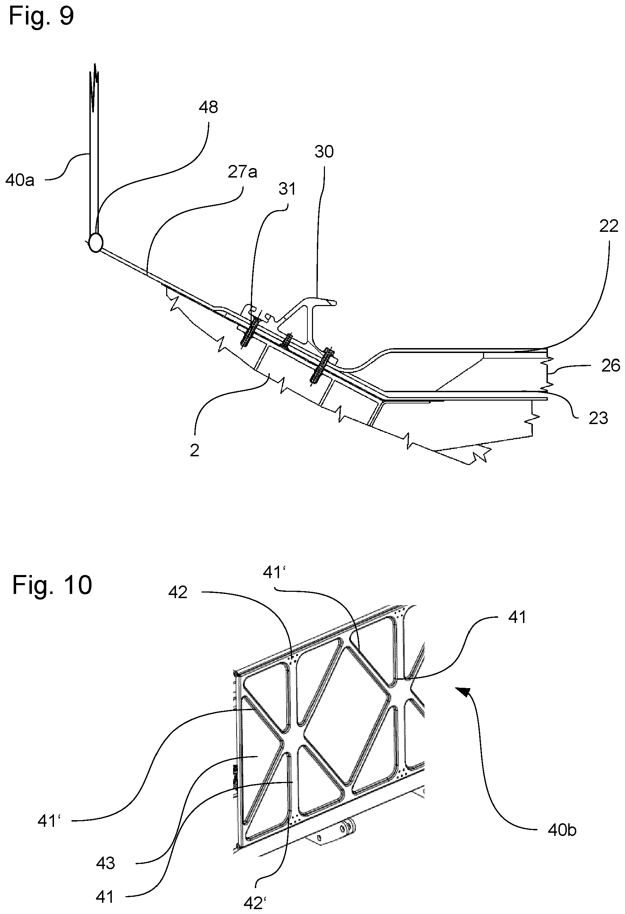

Sowohl die linke Seitenwand 40a wie auch die rechte Seitenwand 40b weisen eine Verstärkung bzw. eine Verstärkungsstruktur auf. Wie in der Fig. 10 im Detail gezeigt, umfasst diese Verstärkungsstruktur horizontal verlaufende Verstärkungsstreben 41 und schräg verlaufende Verstärkungsstreben 41' (Horizontal- und Querstreben). Diese Verstärkungsstreben 41, 41' bilden eine Gitterstruktur, die dazu geeignet ist, Kräfte, die im oberen Bereich der Seitenwände 40a bzw. 40b aufgebracht werden, in den unteren Bereich abzuleiten. Zwischen den Verstärkungsstreben 41, 41' befinden sich Zwischenbereiche 43. Aufgrund der Ausbildung der Seitenwände 40a, 40b mit den Verstärkungsstreben 41, 41' sowie den Zwischenbereichen 43 ist es möglich, eine stabile aber leichte Struktur herzustellen.

In einem Ausführungsbeispiel sind zumindest die Seitenwände 40a, 40b aus einem Faserverbundwerkstoff hergestellt. In diesem Ausführungsbeispiel weisen die Zwischenbereiche 43 eine niedrigere Lagenzahl der verwendeten Fasern auf als die Bereiche der Verstärkungsstreben 41, 41'. Um die Steifigkeit der Verstärkungsstreben 41, 41' herzustellen, ist also die Lagenzahl erhöht. Beispielsweise kann in diesem Bereich die Lagenzahl doppelt so hoch sein wie in dem Zwischenbereich 43. Alternativ oder zusätzlich ist es möglich, eine Kernstruktur vorzusehen, die von Faserlagen umgeben ist, um die Verstärkungsstreben 41, 41' auszubilden. Bei der Kernschicht kann es sich beispielsweise um einen Schaumstoff- oder um einen Wabenkern handeln. Eine Möglichkeit einen entsprechenden Hybridkern herzustellen wird nachfolgend unter Bezug auf die Fig. 9 erläutert. Die Verstärkungsstreben 41, 41' können erfindungsgemäß in entsprechender Weise ausgebildet sein.

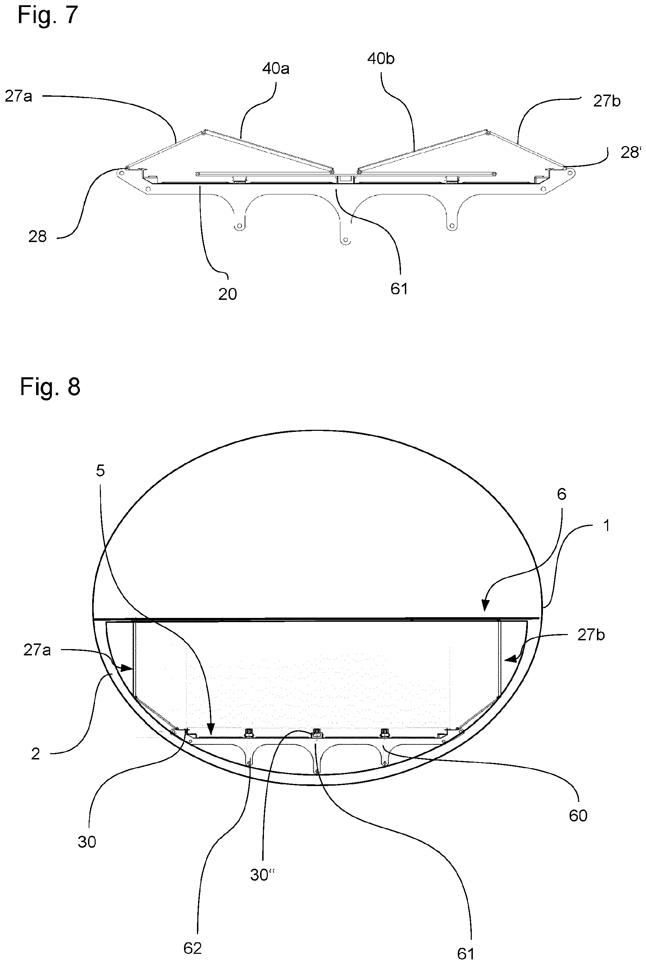

Im oberen und unteren Bereich der Seitenwände 40a, 40b befinden sich Montageeinrichtungen bzw. Montagebereiche, um die Seitenwände 40a, 40b einerseits mit einem Hauptdeck 6 (vgl. Fig. 8) und andererseits mit den Spanten 2 des Flugzeugs zu verbinden. In dem in Fig. 10 gezeigten Ausführungsbeispiel sind hierfür obere Verschraubpunkte 42 bzw. untere Verschraubpunkte 42' vorgesehen.

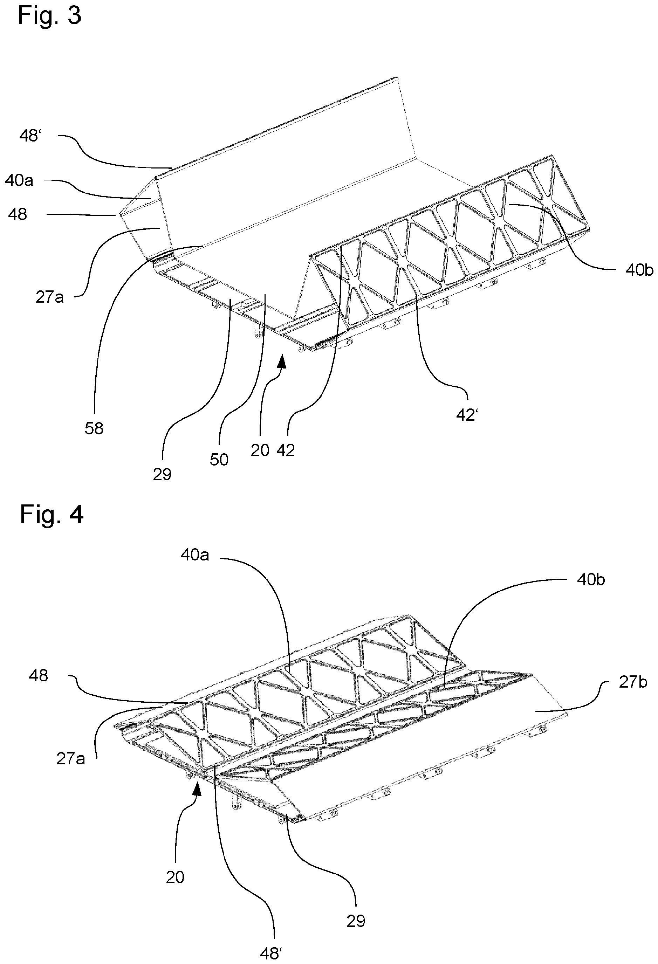

Die Fig. 2 und 3 zeigen das Frachtraummodul 10 in einem teilweise eingefalteten Zustand und in Fig. 8 in einem vollständig zusammengefalteten Zustand. Um von dem Zustand gemäß Fig. 1 zu dem Zustand gemäß Fig. 4 zu gelangen, wird zunächst das mittlere Flächenelement der Decke 50 abgesenkt (vgl. Fig. 2). Danach werden die Seitenwände 40a bzw. 40b derart nach innen gefaltet, dass sie letztlich auf diesem mittleren Flächenelement zu liegen kommen (vgl. Fig. 4).

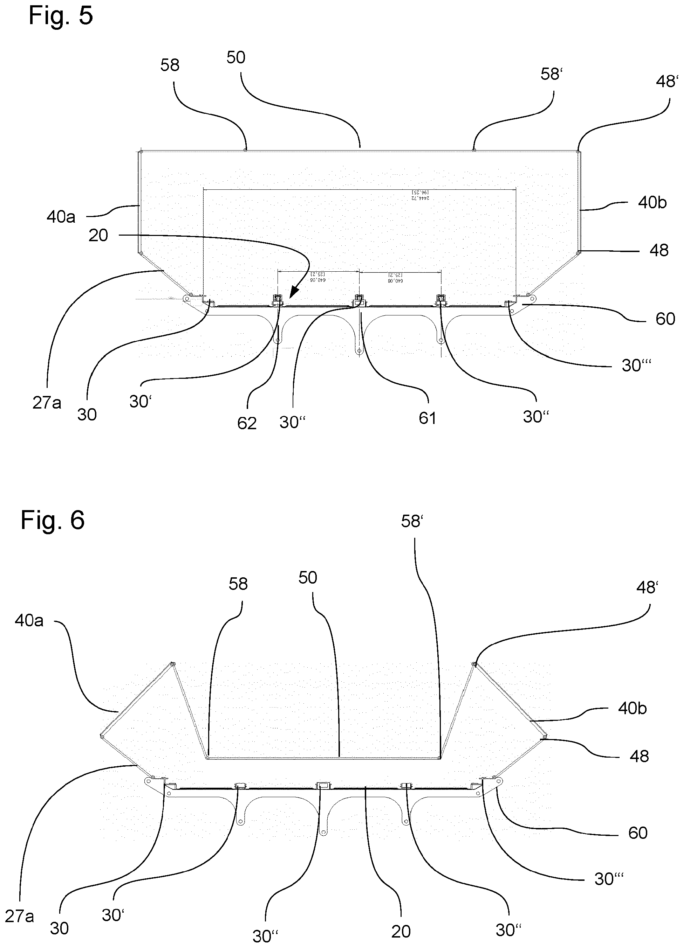

Die Fig. 5 bis 7 zeigen eine Seitenansicht des Frachtraummoduls 10 gemäß der Fig. 1. Hierbei korrespondieren Fig. 1 und Fig. 5, Fig. 3 und Fig. 6 sowie Fig. 4 und Fig. 7.

In einem Ausführungsbeispiel ist das Frachtraummodul 10 mit einer Vielzahl von Bodenträgern 60 verbunden. Diese können beispielsweise aus einem Faserverbundwerkstoff hergestellt sein. Wie anhand der Fig. 1 ersichtlich, sind sie in regelmäßigen Abständen an der Unterseite des Bodens 20 angeordnet. Die Bodenträger weisen ihrerseits Querträger 61 sowie Füße 62 auf. Die Bodenträger 60 dienen dazu, den Boden 20 weiter zu versteifen sowie diesen mit den Tragstrukturen, insbesondere den Spanten 2 des Flugzeugs zu verbinden.

In dem in Fig. 5 gezeigten Ausführungsbeispiel sind im Inneren des Frachtraummoduls 10 Funktionseinrichtungen angeordnet. Hierbei handelt es sich um sich in Längsrichtung des Flugzeugs erstreckende Seitenschienen 30, 30‴ sowie um U-Profile 30', 30", die Riegel und andere Funktionseinrichtungen, wie beispielsweise PDUs aufnehmen können. Die U-Profile 30', 30" sind mit den Bodenträgern 60 verschraubt, so dass sie das jeweilige Frachtraummodul 10 versteifen. In einem bevorzugten Ausführungsbeispiel befinden sich zwischen den U-Profilen 30', 30" und den Bodenträgern 60 Abschnitte des Bodens 20, so dass die Montage der U-Profile 30', 30" gleichzeitig zur Befestigung des Frachtraummoduls 10 führt.

In einem anderen Ausführungsbeispiel ist der Bodenträger 60 Teil der Tragstruktur des Flugzeugs oder zumindest bereits vor der Montage des Frachtraummoduls in dem Flugzeug montiert. In diesem Ausführungsbeispiel wird das Frachtraummodul 10 ohne Bodenträger 60, ggf. bereits mit einer Bestückung von Funktionseinrichtungen, in das Flugzeug eingebracht, wobei nach dem Einbringen ein Verschrauben des Bodens 20, insbesondere unter Verwendung der Funktionseinrichtungen, mit den Bodenträgern 60 erfolgt.

Auch die Seitenschienen 30, 30‴ können mit den Bodenträgern 60 verschraubt sein. Alternativ oder zusätzlich können, wie in Fig. 9 schematisch dargestellt, die Seitenschienen 30, 30‴ über Befestigungsschrauben, z.B. Befestigungsschraube 31, unmittelbar mit den Spanten 2 des Flugzeugs verbunden werden, um das Frachtraummodul 10 innerhalb des Flugzeugs zu fixieren.

Fig. 8 zeigt einen schematischen Schnitt durch ein Flugzeug, wobei im Inneren des Flugzeugs ein Frachtraummodul 10 angeordnet ist, wie dies bereits in mehreren Ausführungsbeispielen erläutert wurde. Das Flugzeug weist eine schematisch dargestellte Außenhaut 1 auf. Diese Außenhaut ist an Spanten 2 befestigt. Der Innenbereich des Flugzeugs wird durch das Hauptdeck 6 im Wesentlichen in zwei Hälften geteilt. Das Frachtraummodul 10 stützt dieses Hauptdeck 6 gegenüber den Spanten 2 ab. Hierfür weisen die Seitenwände 40a, 40b die bereits beschriebene und in Fig. 10 näher erläuterte Stützstruktur auf. Um Kräfte, die auf das Hauptdeck 6 wirken, in den unteren Bereich der Tragstruktur, z.B. Spanten 2, des Flugzeugs ableiten zu können, sind die Seitenwände 40a, 40b, beispielsweise über entsprechende Winkel oder Auskragungen mit Querträgern des Hauptdecks 6 verbunden. Hierfür können insbesondere die oberen Verschraubpunkte 42 eingesetzt werden.

Im unteren Bereich der Seitenwände 40b können ebenfalls entsprechende Winkel oder Adapter vorgesehen werden, die unter Verwendung der unteren Verschraubpunkte 42' mit den Seitenwänden 40a, 40b verbunden sind. Diese Winkel können mit den Spanten 2 oder anderen Tragstrukturen des Flugzeugs verbunden werden.

In dem in Fig. 8 gezeigten Ausführungsbeispiel wird eine weitere Versteifung des Flugzeugs durch die gelenkige Verbindung der Seitenwände 40a, 40b mit dem Boden 20 sowie mit der Decke 50 erreicht.

Neben einer erfindungsgemäßen Befestigungsmöglichkeit des Bodens 20 mit den Tragstrukturen des Flugzeugs zeigt die Fig. 9 einen weiteren erfindungsrelevanten Aspekt, der ggf. in dem Frachtraummodul 10 verwandt wird. So ist gemäß dem Ausführungsbeispiel der Fig. 9 der Horizontalabschnitt 29 des Bodens 20 in Form eines Hybridkerns aufgebaut. Das heißt, der Boden 20 umfasst eine Art Sandwichstruktur, bei der zwischen einer Bodenoberseite 22 und einer Bodenunterseite 23 ein Schaum vorgesehen ist. Die Bodenoberseite und die Bodenunterseite werden durch eine Vielzahl von Faserlagen, beispielsweise Glasfasern und/oder Kohlefasern gebildet. Der Kern in Form des Schaums 26 wird von diesen Lagen umschlossen. In einem Ausführungsbeispiel kontaktieren sich die Lagen der Bodenoberseite 22 und der Bodenunterseite 23 im Randbereich. Hier ist dementsprechend kein Schaum 26 vorgesehen. Der Sandwichaufbau sorgt dafür, dass der Boden 20 bei relativ geringem Gewicht eine hohe Steifigkeit aufweist. Der Schaum 26 kann beim Herstellungsprozess vom Harz teilweise durchdrungen werden. Anstelle des Schaums 26 kann auch eine Wabenstruktur verwandt werden, um die Steifigkeit des Bodens 20 zu erhöhen.

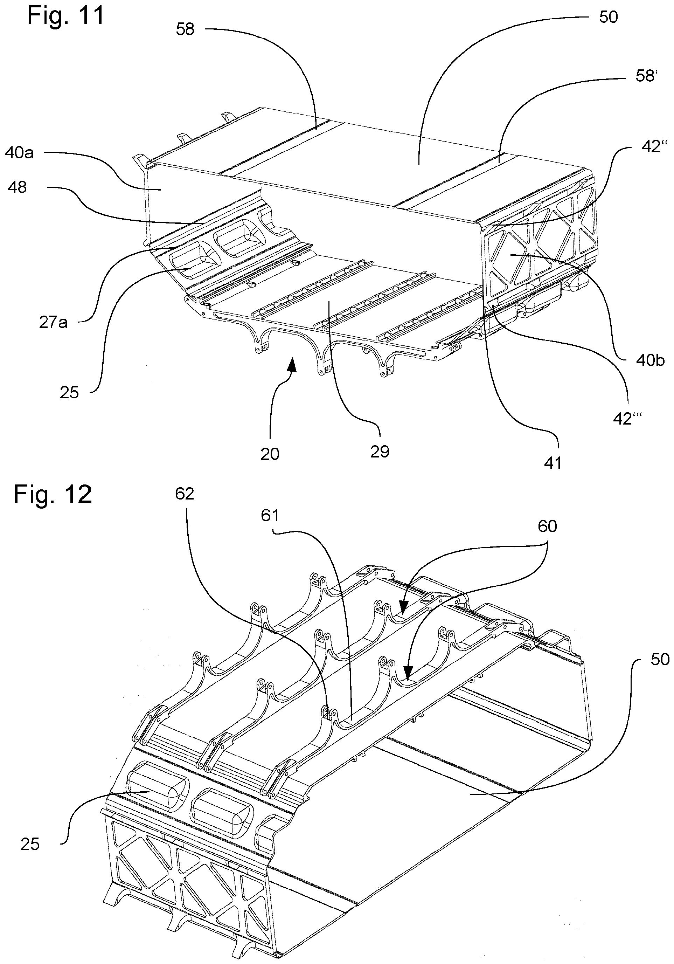

Fig. 11 zeigt ein weiteres erfindungsgemäßes Ausführungsbeispiel des Frachtraummoduls. Das Frachtraummodul ist in der Fig. 11 in einem entfalteten Zustand dargestellt. Ein wesentlicher Unterschied des Frachtraummoduls gemäß Fig. 11 im Vergleich zu dem aus Fig. 1 besteht darin, dass an dem linken Seitenabschnitt 27a und dem rechten Seitenabschnitt 27b jeweils mehrere Trittpfannen 25 vorgesehen sind. Die Trittpfannen 25 dienen dazu, dass man an Frachtcontainern und Frachtpaletten die nicht den gesamten Frachtraum ausfüllen, seitlich vorbeigehen kann. In dem gezeigten Ausführungsbeispiel haben die Trittpfannen 25 einen Trittbereich, der in dem in Fig. 11 gezeigten Zustand im Wesentlichen parallel zu dem Horizontalabschnitt 29 des Bodens 20 verläuft. Insofern kann eine relativ komfortable Fortbewegung sichergestellt werden. Die Trittpfannen 25 sind integraler Bestandteil des jeweiligen Seitenabschnitts 27a, 27b. Beim Herstellen der Seitenabschnitte 27a, 27b können diese ohne weiteres integriert werden. Insbesondere bei der Herstellung der Seitenabschnitte 27a, 27b aus einem Faserverbundwerkstoff können die Trittpfannen 25 vor dem Aushärten des verwendeten Epoxidharzes ausgeformt werden.

In dem gezeigten Ausführungsbeispiel erstrecken sich die Trittpfannen 25 über einen Bereich zwischen 50 und 100 cm und sind jeweils maximal 50 cm voneinander beabstandet.

Erfindungsgemäß können auch Teilabschnitte der Trittpfannen 25 in ein Frachtraummodul 10 eingelassen werden (vgl. Fig. 11), wobei sich eine vollständige Trittpfanne 25 erst beim Zusammenfügen mehrerer Frachtraummodule 10 ergibt. Das hinzuzufügende Frachtraummodul 10 weist dann den fehlenden Teil der Trittpfanne 25 auf.

Auch die Verschraubpunkte 42, 42' unterscheiden sich bei dem Frachtraummodul 10 gemäß der Fig. 11 von dem der Fig. 1. Hier sind zur Befestigung und zum Abstützen des Hauptdecks 6 im oberen Bereich des Frachtraummoduls 10 seitlich auskragende Befestigungsprofile 42" vorgesehen. Diese stützen im entfalteten Zustand das Hauptdeck 6. Im unteren Bereich der Seitenwände 40a, 40b befinden sich die Befestigungsprofile 42‴, die sich auf der Struktur, beispielsweise auf den Spanten 2 des Flugzeugs abstützen. In einem Ausführungsbeispiel passen sich die Befestigungsprofile 42", 42‴ so in das Flugzeug ein, dass keine zusätzliche Verschraubung nötig ist, um Kräfte, die auf das Hauptdeck 6 wirken, in den Flugzeugrumpf abzuleiten. Bevorzugt werden die Befestigungsprofile 42", 42‴ ihrerseits mit dem Hauptdeck 6 und beispielsweise den Spanten 2 verschraubt und/oder verklebt.

Fig. 12 zeigt das Frachtraummodul 10 gemäß Fig. 11 in einer Ansicht von unten. In dieser Ansicht sind die Bodenträger 60 mit den Füßen 62 und den zugehörigen Befestigungspunkten gut zu erkennen. Sie versteifen das Frachtraummodul 10 in Querrichtung. In dem gezeigten Ausführungsbeispiel sind pro Frachtraummodul 10 drei Bodenträger 60 vorgesehen.

In den beschriebenen Ausführungsbeispielen weisen die Querträger Füße 62 zur zumindest teilweisen Befestigung an den Spanten 2 auf. In einem weiteren erfindungsgemäßen Ausführungsbeispiel kann auf die Füße 62 verzichtet werden. In diesem Ausführungsbeispiel werden lediglich die Enden der Querträger 61 mit der Struktur des Flugzeugs, beispielsweise den Spanten 2, verschraubt. Der Querträger 61 überspannt in dieser Konstellation freischwebend die Bilge. Der Querträger 61 wird so dimensioniert, dass dieser die notwendigen Kräfte über die Enden in die Tragstruktur des Flugzeugs ableiten kann.

In den beschriebenen Ausführungsbeispielen wird eine relativ hohe Anzahl von Gelenkabschnitten verwandt, um das Frachtraummodul 10 faltbar auszubilden. Theoretisch ist es jedoch möglich, mit einer deutlich geringeren Anzahl einen ähnlichen Effekt zu erzielen. Beispielsweise könnte die Decke 50 zweiteilig, also mit einem Spalt, ausgestattet werden und lediglich die Verbindung zwischen dem Boden 20 und den Seitenwänden 40a, 40b gelenkig sein. In dieser Ausgestaltung wären die in Fig. 1 gezeigten Gelenkabschnitte 48' steif, so dass sich unabhängig von dem Entfaltungszustand ein rechter Winkel zwischen dem jeweiligen Deckenabschnitt und der jeweiligen Seitenwand 40a bzw. 40b einstellt.

Weiterhin sind in den Ausführungsbeispielen Verschraubpunkte 42, 42' an den Seitenwänden 40a, 40b angeordnet. Erfindungsgemäß ist es jedoch auch möglich, diese Verschraubpunkte 42, 42' alternativ oder zusätzlich in der Decke 50 und/oder an den Seitenabschnitten 27a, 27b - vorzugsweise nahe den unteren Gelenkabschnitten 48 - anzuordnen.

In den beschriebenen Ausführungsbeispielen weisen die Seitenwände 40a, 40b Verstärkungsstreben 41, 41' auf. Es ist jedoch auch möglich, auf diese Verstärkungsstreben 41, 41' zu verzichten und stattdessen die Seitenwände 40a, 40b entsprechend stärker zu dimensionieren, so dass diese die notwendigen Lasten aufnehmen können. Insofern kann beispielsweise auf die Zwischenbereiche 43 verzichtet werden.

In diesem Zusammenhang wurde auch die Herstellung der Verstärkungsstreben 41, 41' unter Erhöhung der Lagenzahl beschrieben. Entsprechende Verstärkungsstreben können jedoch auch erfindungsgemäß durch das Einlagern von entsprechend steiferen Materialien hergestellt werden.

Bei den beschriebenen Ausführungsformen wurde das erfindungsgemäße Frachtraummodul 10 dazu verwendet, den unteren Bereich des Flugzeugs auszukleiden. Theoretisch ist es jedoch denkbar, ein entsprechend modifiziertes Frachtraummodul auch dazu zu verwenden, den oberen Bereich, d. h. oberhalb des Hauptdecks, auszukleiden. Anhand der beschriebenen Ausführungsbeispiele ergeben sich zahlreiche Variationsmöglichkeiten der Erfindung.

### Bezuaszeichenliste

- 1: Außenhaut
- 2: Spanten
- 3: Querträger
- 4: Längsträger
- 5: Frachtdeck
- 6: Hauptdeck
- 10: Frachtraummodul
- 20: Boden
- 21: Fixierschraube
- 22: Bodenoberseite
- 23: Bodenunterseite
- 25: Trittpfanne
- 26: Schaum
- 27a, 27b: Seitenabschnitt
- 28, 28': Gelenkabschnitt
- 29: Horizontalabschnitt

- 30, 30', 30", 30‴: Funktionseinrichtungen, z. B. Seitenschienen, U-Profil
- 31: Befestigungsschraube

- 40a, 40b: Seitenwand
- 41, 41': Verstärkungsstreben
- 42, 42': Verschraubpunkte
- 42", 42‴: Befestigungsprofil
- 43: Zwischenbereich
- 48, 48': Gelenkabschnitt

- 50: Decke
- 58, 58': Gelenkabschnitt
- 60: Bodenträger
- 61: Querträger
- 62: Fuß

## Patentansprüche

1. Frachtraummodul für ein Flugzeug, umfassend:
- mindestens einen Boden (20);
- mindestens eine Seitenwand (40a, 40b), die mit dem Boden (20) verbunden ist,
- obere Montageeinrichtungen (42) zur Verbindung der Seitenwand (40a, 40b) mit einem Hauptdeck (6), insbesondere Querträgern des Hauptdecks (6),
- untere Montageeinrichtungen (42') zur Verbindung der Seitenwand (40a, 40b) mit Spanten (2) und/oder anderen Strukturelementen des Flugzeugs, wobei
die Seitenwand (40a, 40b) Verstärkungen (41, 41') derart aufweist, dass die Seitenwand (40a, 40b) geeignet ist, in einem montierten Zustand einen Teil der Tragstruktur des Flugzeugs zu bilden und/oder das Hauptdeck abzustützen,
**dadurch gekennzeichnet, dass**
der Boden (20) über ein Gelenk (28, 28', 48, 48') mit der mindestens einen Seitenwand (40a, 40b) verbunden ist.

2. Frachtraummodul nach Anspruch 1,
**dadurch gekennzeichnet, dass**
mindestens eine der Montageeinrichtungen (42, 42') derart ausgebildet ist, dass die Seitenwand (40a, 40b) durch Schraubeinrichtungen (21) mit dem Hauptdeck (6) und/oder Spanten (2) und/oder Strukturelementen des Flugzeugs verbindbar ist.

3. Frachtraummodul nach einem der vorhergehenden Ansprüche,
**dadurch gekennzeichnet, dass**
der Boden (20) und/oder die Seitenwand (40a, 40b) ein Faserverbundwerkstoff ist, wobei die mindestens eine Seitenwand (40a, 40b) vorzugsweise zumindest über Faserstränge mit dem Boden (20) verbunden ist.

4. Frachtraummodul nach einem der vorhergehenden Ansprüche,
**dadurch gekennzeichnet, dass**
der Boden (20) mindestens einen Horizontalabschnitt (29) und mindestens einen gegenüber dem Horizontalabschnitt (29) geneigten Seitenabschnitt (27a, 27b) umfasst, wobei Horizontalabschnitt (29) und/oder Seitenabschnitt (27a, 27b) mit einer Stützstruktur, insbesondere über mehrere Schraubverbindungen, verbunden ist.

5. Frachtraummodul nach einem der vorhergehenden Ansprüche,
**dadurch gekennzeichnet, dass**
das Gelenk einen Gelenkabschnitt (28, 28', 48, 48'), vorzugsweise in Form von zumindest teilweise elastischen Bereichen, aufweist.

6. Frachtraummodul nach einem der vorhergehenden Ansprüche,
**dadurch gekennzeichnet, dass**
das Frachtraummodul Dichtlippen umfasst, die an Rändern des Bodens (20) und/oder mindestens einer Seitenwand (40a, 40b) und/oder mindestens einer Decke (50) zur Abdichtung von Übergängen zu weiteren Frachtraummodulen angeordnet sind.

7. Frachtraummodul nach einem der vorhergehenden Ansprüche,
**dadurch gekennzeichnet, dass**
die Seitenwand (40a, 40b) eine Sandwichstruktur umfasst.

8. Frachtraummodul nach einem der vorhergehenden Ansprüche,
**gekennzeichnet durch**:
eine Decke (50), insbesondere eine faltbare Decke, die an mindestens einer Seitenwand (40a, 40b), insbesondere gelenkig, verbunden ist.

9. Frachtraummodul nach einem der vorhergehenden Ansprüche,
**gekennzeichnet durch**:
ein Paar von Seitenwänden (40a, 40b);
ein Paar von Seitenabschnitten (27a, 27b);
wobei der Boden (20) mit den Seitenabschnitten (27a, 27b), die Seitenwände (40a, 40b) und die Decke (50) derart gelenkig, insbesondere über Gelenkabschnitte (28, 28', 48, 48', 58, 58') miteinander verbunden sind, dass sich das Frachtraummodul aus einem zusammengefalteten Zustand in einen entfalteten Zustand zur Montage im Flugzeug bringen lässt.

10. Frachtraummodul nach einem der vorhergehenden Ansprüche,
**gekennzeichnet durch**:
mindestens eine Trittpfanne (25) mit einem Trittbereich, wobei die mindestens eine Trittpfanne (25) in mindestens einem Seitenabschnitt (27a, 27b) des Bodens (20) angeordnet ist.

11. Flugzeug mit mindestens einem Frachtraummodul, vorzugsweise einer Vielzahl von Frachtraummodulen, nach einem der Ansprüche 1 bis 10.

12. Verfahren zur Installation eines Frachtdecks, insbesondere zur Herstellung eines Flugzeuges, umfassend die Schritte:
a) Herstellen eines Frachtraummodules (10) nach einem der Ansprüche 1 bis 10;
b) Einbringen des Frachtraummodules (10) in das Flugzeug;
c) Befestigen der Seitenwände (40a, 40b) einerseits am Hauptdeck (6) des Flugzeugs, andererseits an, insbesondere bilgennahen, Tragstrukturen des Flugzeugs derart, dass die Seitenwände (40a, 40b) das Hauptdeck (6) gegenüber den Tragstrukturen des Flugzeugs abstützen.

13. Verfahren nach Anspruch 12,
**dadurch gekennzeichnet, dass**
das Frachtraummodul (10) in das Flugzeug in einem zusammengefalteten Zustand eingebracht wird, wobei vor dem Schritt c) ein Auf- und/oder Entfalten des Frachtraummoduls (10) erfolgt.

14. Verfahren nach Anspruch 12 oder 13,
**gekennzeichnet durch**:
ein Befestigen von Funktionseinrichtungen an vordefinierten Stellen des Bodens (20) außerhalb des Flugzeugs und
ein Befestigen der Funktionseinrichtung mitsamt dem Boden (20) an tragenden Strukturen des Flugzeugs.

15. Verfahren nach einem der Ansprüche 12 bis 14,
**dadurch gekennzeichnet, dass**
das Frachtraummodul (10) zumindest teilweise aus einem Faserverbundwerkstoff hergestellt ist.

## Claims

1. A cargo compartment module for an aircraft, comprising:
- at least one floor (20),
- at least one side wall (40a, 40b) that is connected to the floor (20),
- upper installation means (42) for connecting the side wall (40a, 40b) to the main deck (6), in particular transverse supports of the main deck (6),
- lower installation means (42') for connecting the side wall (40a, 40b) to frames (2) and/or other structural elements of the aircraft,
wherein
the side wall (40a, 40b) has reinforcements (41, 41') such that the side wall (40a, 40b) is suitable, in an installed state, to form part of the load-bearing structure of the aircraft and/or to support the main deck (6), **characterized in that**
the floor (20) is connected via a joint (28, 28', 48, 48') to the at least one side wall (40a, 40b).

2. The cargo compartment module according to claim 1,
**characterized in that**
at least one of the installation means (42, 42') is designed such that the side wall (40a, 40b) can be connected to the main deck (6) and/or frames (2) and/or structural elements of the aircraft by screw means (21).

3. The cargo compartment module according to any one of the preceding claims,
**characterized in that**
the floor (20) and/or the side wall (40a, 40b) is a fibre composite material, wherein the at least one side wall (40a, 40b) is connected to the floor (20) preferably at least by way of fibre strands.

4. The cargo compartment module according to any one of the preceding claims,
**characterized in that**
the floor (20) comprises at least one horizontal section (29) and at least one side section (27a, 27b) that is inclined relative to the horizontal section (29), wherein the horizontal section (29) and/or the side section (27a, 27b) is connected to a supporting structure, in particular by way of a plurality of screw connections.

5. The cargo compartment module according to any one of the preceding claims,
**characterized in that**
the joint comprises a joint section (28, 28', 48, 48'), preferably in the form of at least partially elastic regions.

6. The cargo compartment module according to any one of the preceding claims,
**characterized in that**
the cargo compartment module comprises sealing lips that are arranged at edges of the floor (20) and/or of at least one side wall (40a, 40b) and/or of at least one ceiling (50) in order to seal transitions to other cargo compartment modules.

7. The cargo compartment module according to any one of the preceding claims,
**characterized in that**
the side wall (40a, 40b) comprises a sandwich structure.

8. The cargo compartment module according to any one of the preceding claims,
**characterized by**:
a ceiling (50), in particular a foldable ceiling, which is connected to at least one side wall (40a, 40b), in particular in an articulated manner.

9. The cargo compartment module according to any one of the preceding claims,
**characterized by**:
a pair of side walls (40a, 40b);
a pair of side sections (27a, 27b);
wherein the floor (20) with the side sections (27a, 27b), the side walls (40a, 40b) and the ceiling (50) are connected to one another in an articulated manner, in particular by way of joint sections (28, 28', 48, 48', 58, 58'), such that the cargo compartment module can be brought from a folded state to an unfolded state for installation in the aircraft.

10. The cargo compartment module according to any one of the preceding claims,
**characterized by**:
at least one tread pan (25) having a tread region, wherein the at least one tread pan (25) is arranged in at least one side section (27a, 27b) of the floor (20).

11. An aircraft having at least one cargo compartment module, preferably a plurality of cargo compartment modules, according to any one of claims 1 to 10.

12. A method for installing a cargo deck, in particular for producing an aircraft, comprising the steps:
a) producing a cargo compartment module (10) according to any one of claims 1 to 10;
b) introducing the cargo compartment module (10) into the aircraft;
c) fastening the side walls (40a, 40b) on the one hand to the main deck (6) of the aircraft and on the other hand to load-bearing structures of the aircraft, in particular close to the bilge, such that the side walls (40a, 40b) support the main deck (6) against the load-bearing structures of the aircraft.

13. The method according to claim 12,
**characterized in that**
the cargo compartment module (10) is introduced into the aircraft in a folded state, the cargo compartment module (10) being opened out and/or unfolded prior to step c).

14. The method according to claim 12 or 13,
**characterized by**:
- fastening functional devices at predefined points on the floor (20) outside of the aircraft;
- fastening the functional device together with the floor (20) to load-bearing structures of the aircraft.

15. The method according to any one of claims 12 to 14,
**characterized in that**
the cargo compartment module (10) is made at least partially of a fibre composite material.

## Revendications

1. Module de soute à fret pour un avion, comprenant:
- au moins un fond (20) ;
- au moins une paroi latérale (40a, 40b) reliée avec le fond (20) ;
- des dispositifs de montage supérieurs (42) pour attacher la paroi latérale (40a, 40b) à un pont principal (6), en particulier à des traverses du pont principal (6),
- des dispositifs de montage inférieurs (42') pour attacher la paroi latérale (40a, 40b) à des couples (2) et/ou d'autres éléments de structure de l'avion,
dans lequel la paroi latérale (40a, 40b) présente des renforts (41, 41') de telle manière que la paroi latérale (40a, 40b) puisse, dans un état monté, former une partie de la structure portante de l'avion et/ou soutenir le pont principal,
**caractérisé en ce que** le fond (20) est attaché à l'au moins une paroi latérale (40a, 40b) par l'intermédiaire d'une articulation (28, 28', 48, 48').

2. Module de soute à fret selon la revendication 1, **caractérisé en ce qu'**au moins un des dispositifs de montage (42, 42') est conçu de telle sorte que la paroi latérale (40a, 40b) peut être attachée au pont principal (6) et/ou à des couples (2) et/ou à des éléments de structure de l'avion par des dispositifs de vissage (21).

3. Module de soute à fret selon l'une des revendications précédentes, **caractérisé en ce que** le fond (20) et/ou la paroi latérale (40a, 40b) est en matériau composite fibreux, l'au moins une paroi latérale (40a, 40b) étant de préférence attachée au fond (20) au moins par l'intermédiaires de mèches de fibres.

4. Module de soute à fret selon l'une des revendications précédentes, **caractérisé en ce que** le fond (20) comprend au moins une partie horizontale (29) et au moins une partie latérale (27a, 27b) inclinée par rapport à la partie horizontale (29), la partie horizontale (29) et/ou la partie latérale (27a, 27b) étant attachées à une structure d'appui, en particulier par l'intermédiaire de plusieurs assemblages vissés.

5. Module de soute à fret selon l'une des revendications précédentes, **caractérisé en ce que** l'articulation présente une partie articulée (28, 28', 48, 48') prenant de préférence la forme de zones au moins en partie élastiques.

6. Module de soute à fret selon l'une des revendications précédentes, **caractérisé en ce que** le module de soute à fret comprend des lèvres d'étanchéité qui sont disposées sur les bords du fond (20) et/ou au moins une paroi latérale (40a, 40b) et/ou au moins une paroi supérieure (50) pour assurer l'étanchéité de transitions avec d'autres modules de soute à fret.

7. Module de soute à fret selon l'une des revendications précédentes, **caractérisé en ce que** la paroi latérale (40a, 40b) comprend une structure en sandwich.

8. Module de soute à fret selon l'une des revendications précédentes, **caractérisé en ce qu'**il comprend une paroi supérieure (50), en particulier une paroi supérieure repliable, qui est attachée, en particulier de façon articulée, à au moins une paroi latérale (40a, 40b).

9. Module de soute à fret selon l'une des revendications précédentes, **caractérisé en ce qu'**il comprend :
une paire de parois latérales (40a, 40b) ;
une paire de parties latérales (27a, 27b),
le fond (20) possédant les parties latérales (27a, 27b), les parois latérales (40a, 40b) et la paroi supérieure (50) étant attachées les unes aux autres de façon articulée, en particulier par l'intermédiaire de parties articulées (28, 28', 48, 48', 58, 58'), de telle manière que le module de soute à fret puisse être amené d'un état replié à un état déplié en vue du montage dans l'avion.

10. Module de soute à fret selon l'une des revendications précédentes, **caractérisé en ce qu'**il comporte au moins une cuvette de marchepied (25) avec une zone de marchepied, l'au moins une cuvette de marchepied (25) étant disposée dans au moins une partie latérale (27a, 27b) du fond (20).

11. Avion muni d'au moins un module de soute à fret, de préférence de plusieurs modules de soute à fret, selon l'une des revendications 1 à 10.

12. Procédé pour l'installation d'un pont de chargement, en particulier pour la fabrication d'un avion, comprenant les étapes suivantes :
a) fabrication d'un module de soute à fret (10) selon l'une des revendications 1 à 10 ;
b) introduction du module de soute à fret (10) dans l'avion ;
c) fixation des parois latérales (40a, 40b) au pont principal (6) de l'avion, d'une part, et d'autre part à des structures portantes de l'avion, en particulier proches de la cale, de telle manière que les parois latérales (40a, 40b) soutiennent le pont principal (6) par rapport aux structures portantes de l'avion.

13. Procédé selon la revendication 12, **caractérisé en ce que** le module de soute à fret (10) est introduit dans l'avion dans un état replié, auquel cas l'étape c) est précédée d'un dépliage ou déploiement du module de soute à fret (10).

14. Procédé selon la revendication 12 ou 13, **caractérisé en ce qu'**il comprend :
la fixation de dispositifs fonctionnels à des emplacements prédéfinis du fond (20) à l'extérieur de l'avion et
la fixation du dispositif fonctionnel avec le fond (20) à des structures portantes de l'avion.

15. Procédé selon l'une des revendications 12 à 14, **caractérisé en ce que** le module de soute à fret (10) est fabriqué au moins en partie dans un matériau composite fibreux.
